# EUROPÄISCHE PATENTANMELDUNG

(11) **EP 4 506 541 A1**
(43) Veröffentlichungstag der Anmeldung: **12.02.2025**
(21) Anmeldenummer: 23020374.7
(22) Anmeldetag: 10.08.2023
(51) Int. Cl.: F01D 11/04, F04D 29/10, F04D 29/12

(54) **VERFAHREN ZUM FÖRDERN EINES PROZESSMEDIUMS UND ANLAGE HIERFÜR**

(71) Anmelder: Linde GmbH, 82049 Pullach (DE)
(72) Erfinder: Suckert, Stefan, 82049 Pullach (DE); Reinke, Michael, 82049 Pullach (DE); Lang, Martin, 82049 Pullach (DE); Kamann, Martin, 82049 Pullach (DE)
(74) Vertreter: Fischer, Werner

(57) **Zusammenfassung**

Die Erfindung betrifft ein Verfahren zum Fördern eines Prozessmediums (b), insbesondere Kohlenstoffdioxid, mittels einer Turbomaschine (130), wobei die Turbomaschine eine gasgeschmierte Dichtung zur Abdichtung zwischen einer Prozessseite der Turbomaschine und einer Umgebungsseite der Turbomaschine aufweist, wobei das Prozessmedium (b) über eine oder mehrere Zuleitungen (135) der Turbomaschine (130) auf der Prozessseite zum Fördern, insbesondere zum Verdichten, zugeführt wird, wobei der Turbomaschine (130) auf der Prozessseite ein Dichtungsmedium (c) zugeführt wird, wobei ein Leckage-Teil (f) des Dichtungsmediums (c) von der Prozessseite über die gasgeschmierte Dichtung zur Umgebungsseite gelangen kann, wobei der Turbomaschine (130) auf der Umgebungsseite ein Trennmedium (d) zugeführt wird, wobei sich zumindest ein Teil des Trennmediums und, falls vorhanden, zumindest ein Teil des Leckage-Teils (f) zum einem Medien-Gemisch (e) vermischen, und wobei zumindest ein Teil des Medien-Gemisches (e) abgeführt und dem Prozessmedium zugeführt wird.

## Beschreibung

Die Erfindung betrifft ein Verfahren zum Fördern eines Prozessmediums, insbesondere Kohlenstoffdioxid, mittels einer Turbomaschine, z.B. eines Turbokompressors oder Turboexpanders, sowie eine Anlage hierfür mit einer Turbomaschine.

Bei der Herstellung von sog. Blauem Wasserstoff oder Blauem Ammoniak kann es bestimmte Vorgaben geben, wieviel des dabei anfallenden Kohlenstoffdioxids sequestriert werden muss, d.h. nicht an die Umgebung abgegeben werden darf. Ein typischer Wert ist z.B., dass mehr als 95% des anfallenden Kohlenstoffdioxids sequestriert werden müssen.

Dies bedeutet, dass der Verlust von Kohlenstoffdioxid an die Atmosphäre bei der Herstellung möglichst geringgehalten werden sollte. Dies gilt gleichermaßen für andere Prozessmedien, bei denen der Verlust geringgehalten werden soll. Vor diesem Hintergrund stellt sich die Aufgabe, eine effiziente Möglichkeit bereitzustellen, den Verlust von Prozessmedien möglichst gering zu halten bzw. zu reduzieren.

### Offenbarung der Erfindung

Diese Aufgabe wird durch ein Verfahren zum Fördern eines Prozessmediums mittels einer Turbomaschine sowie eine Anlage hierfür mit einer Turbomaschine mit den Merkmalen der unabhängigen Patentansprüche gelöst. Bevorzugte Ausgestaltungen sind Gegenstand der abhängigen Patentansprüche sowie der nachfolgenden Beschreibung.

### Vorteile der Erfindung

Die Erfindung beschäftigt sich mit dem Fördern von Prozessmedien wie z.B. Kohlenstoffdioxid oder anderen kohlenstoffhaltigen Gasen, wie sie insbesondere bei der Erzeugung von Wasserstoff oder Ammoniak anfallen. Insbesondere dann, wenn es um die Erzeugung von sog. Blauem Wasserstoff oder Blauem Ammoniak geht, ist es in der Regel erforderlich, dass ein gewisser Anteil des bei der Produktion anfallenden Kohlenstoffdioxids einer Sequestrierung zugeführt, d.h. nicht in die Atmosphäre freigesetzt wird. Ein solcher Anteil kann z.B. bei 95% oder mehr liegen. Je höher ein solcher Anteil ist, desto schwieriger ist eine weitere Erhöhung, da auch sehr geringe Anteile einen großen Einfluss haben können.

Eine häufig verwendete Art, Prozessmedien (insbesondere Prozessgase) zu fördern, ist die Verwendung von Turbomaschinen, und zwar insbesondere Turbokompressoren. Für Turbomaschinen gibt es verschiedene Arten der Dichtung.

Eine Turbomaschine weist typischerweise eine Prozessseite und eine Umgebungsseite auf. Dabei umfasst die Prozessseite z.B. einen oder mehrere Impeller oder einen Rotor, die Umgebungsseite hingegen andere Teile der Turbomaschine wie insbesondere ein Lager und dergleichen. Der Impeller bzw. die Impeller ist bzw. sind in der Regel an einer Welle montiert, wobei die Welle in einem Lager drehbar gelagert ist. Außerdem kann die Umgebungsseite z.B. einen Antrieb umfassen, sei es ein elektrischer Antrieb oder auch eine Turbine, z.B. eine Expansionsturbine. Das Prozessmedium wird der Turbomaschine auf der Prozessseite, insbesondere dem Impeller bzw. den Impellern zugeführt, um es zu fördern, z.B. zu verdichten.

Die Prozessseite und die Umgebungsseite sind dabei gegeneinander abgedichtet. Während der Impeller z.B. in einem Gehäuse untergebracht sein kann, wobei eine Zuleitung für das Prozessmedium zu dem Impeller entsprechend angebunden sein kann, ist insbesondere der Bereich der Welle abgedichtet, um Leckagen z.B. des Prozessmediums möglichst zu vermeiden.

Eine grundsätzlich effiziente Art der Abdichtung ist eine sog. Trockengasdichtung (engl.: "Dry Gas Seal"). Eine Trockengasdichtung ist z.B. eine Art Gleitringdichtung, die verwendet wird, um ein Eindringen von Verunreinigungen in das Prozessgas oder unbeabsichtigte Freisetzung des Prozessgases in die Umgebung auszuschließen. Solche Dichtungen sind für die Verwendung in einer Vielzahl von Systemen erhältlich. Sie arbeiten ohne Schmiermittel und können bei sachgemäßer Installation eine sehr lange Lebensdauer bei geringem Wartungsaufwand haben.

Eine Trockengasdichtung stellt hier also eine Barriere zwischen der Prozessseite und der Umgebungsseite dar. Dabei können verschiedene Medien oder Gase verwendet werden, um die Dichtwirkung zu optimieren. Auf der Prozessseite wird typischerweise ein Dichtungsmedium (oder Dichtungsgas oder Sperrgas) zugeführt, auf der Umgebungsseite hingegen ein Trennmedium (oder ein Trenngas). Trotzdem tritt in der Regel eine gewisse Leckage auf, d.h. ein Teil von dem Dichtungsmedium kann von der Prozessseite über die Trockengasdichtung auf die Umgebungsseite gelangen, zumindest während eines Betriebs der Turbomaschine.

Trockengasdichtungen weisen während eines Stillstands meistens gar keine Leckage auf, während eines normalen Betriebs dagegen schon, wenngleich meist mit einer sehr geringen Leckagerate.

Anstelle einer Trockengasdichtung kann aber auch eine andere Art oder ein anderer Typ von gasgeschmierter Dichtung verwendet werden.

Als Dichtungsmedium kann z.B. Prozessgas verwendet werden, wobei insbesondere ein Teil des über eine Ableitung auf der Prozessseite abzuführenden Prozessgases abgezweigt und als das Dichtungsmedium der Turbomaschine, ebenfalls auf der Prozessseite, zugeführt wird. Dabei kann das abgezweigte Prozessgas insbesondere noch gereinigt und/oder getrocknet werden, bevor es dann der Turbomaschine zugeführt wird. In diesem Fall gibt es also eine gewisse Leckage des Prozessmediums.

Der Einsatz von Trockengasdichtungen ist dann von besonderem Interesse, wenn eine Leckage geringgehalten werden soll, insbesondere also, wenn Verluste des Prozessgases gering sein sollen. Dabei kann sich aber zumindest ein Teil des Trennmediums und wenigstens ein Teil des Leckage-Teils (des Dichtungsmediums bzw. Prozessmediums) in einem Mischungsbereich, der sich auf der Umgebungsseite befindet oder zumindest befinden kann, zu einem Medien-Gemisch vereinigen. Während reines Trennmedium - dies kann z.B. Stickstoff sein - an die Umgebung abgeführt werden kann, wird das Medien-Gemisch zur Fackel oder an einen anderen sicheren Bereich oder Ort verbracht. Insbesondere für den Fall, dass ein Teil des Prozessmediums abgezweigt und als Dichtungsmedium verwendet wird, wird somit auch ein Teil des Prozessmediums mit dem Medien-Gemisch zur Fackel oder an einen anderen sicheren Bereich oder Ort verbracht.

Im Rahmen der vorliegenden Erfindung wird nun zumindest ein Teil des Medien-Gemisches (vom Mischungsbereich) abgeführt und dem Prozessmedium vorzugsweise vor dessen Zuführung zur Turbomaschine beigemischt. Damit wird zwar ein gewisser Anteil an Trennmedium dem Prozessmedium zugeführt, dies kann jedoch - zumindest bei geringen Anteilen und/oder je nach weiterer Verwendung des Prozessmediums - akzeptiert werden. Insbesondere wird auf diese Weise aber kein Anteil des (eigentlichen) Prozessmediums, also z.B. Kohlenstoffdioxid, anderweitig abgeführt.

Vielmehr kann der Anteil an Prozessmedium, der z.B. einer Sequestrierung zugeführt wird, erhöht werden. Insbesondere bei der Erzeugung von Blauem Wasserstoff oder Blauem Ammoniak bringt dies entscheidende Vorteile. So können auf diese Weise z.B. 0,2% bis 0,5% mehr an Prozessgas der Sequestrierung zugeführt werden, womit einfacher ein gesamter Anteil von z.B. 95% erreicht werden kann.

Andere Vorkehrungen wie die Anpassung des Erzeugungsprozesses für Wasserstoff oder Ammoniak, z.B. die Erhöhung von Temperaturen teils bis an ein Limit, können so vermieden oder zumindest reduzierten werden. Insgesamt erlaubt dies damit auch das Absenken der Kosten, da das Zuführen des Medien-Gemisches zum Prozessmedium in der Regel sehr kostengünstig bewerkstelligt werden kann.

Die Erfindung ist anhand eines Ausführungsbeispiels in der Zeichnung schematisch dargestellt und wird im Folgenden unter Bezugnahme auf die Zeichnung beschrieben.

### Kurze Beschreibung der Zeichnung

- Figur 1: zeigt schematisch eine Anlage zur Erläuterung der Erfindung.
- Figur 2: zeigt schematisch eine Turbomaschine der Anlage aus Figur 1.

### Ausführliche Beschreibung der Zeichnung

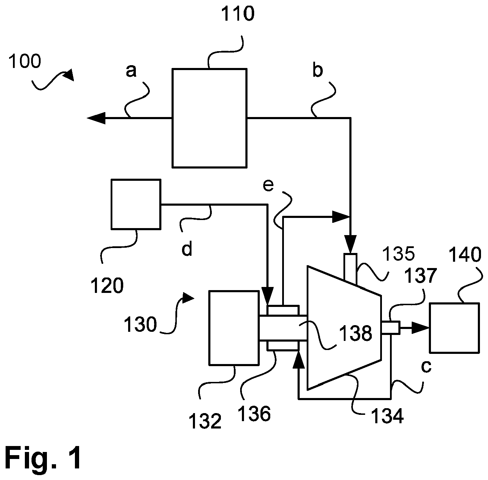

In Figur 1 ist schematisch eine Anlage 100 zur Erläuterung der Erfindung gezeigt. Bei der Anlage 100 handelt es sich um eine erfindungsgemäße Anlage in einer bevorzugten Ausführungsform, anhand der nachfolgend ein erfindungsgemäßes Verfahren in einer bevorzugten Ausführungsform beschrieben werden soll. Die Anlage 100 und das Verfahren sollen nachfolgend übergreifend beschrieben werden.

Die Anlage 100 weist eine Einrichtung 110 auf, die beispielhaft zur Erzeugung von Wasserstoff a eingerichtet ist, und zwar z.B. von sog. Blauem Wasserstoff.

Die konkrete Funktionsweise der Einrichtung 110 ist für die vorliegende Erfindung nicht relevant, neben dem Wasserstoff a wird dabei jedoch auch beispielhaft Kohlenstoffdioxid bereitgestellt, das - dann als Prozessmedium b (oder Prozessgas) - gefördert werden kann. Das Kohlenstoffdioxid kann z.B. auch ein Abfallprodukt bei der Herstellung von Wasserstoff sein, das der Sequestrierung, hier beispielhaft mit 140 bezeichnet, zugeführt werden soll.

Die Anlage 100 weist weiterhin eine Turbomaschine 130 auf, und zwar beispielhaft in Form eines Turbokompressorstranges. Der Turbokompressorstrang 130 wiederum weist beispielhaft einen Antrieb 132, z.B. einen elektrischen Antrieb, einen Turboverdichter 134 mit Zuleitung (oder Ansaugleitung) 135 und Ableitung 137 sowie eine Welle 138 auf, über die der Turboverdichter 134 mittels einer Kupplung an den Antrieb 132 angebunden ist. Zudem weist der Turbokompressor 130 ein Lager 136 auf, in dem die Welle 138 gelagert ist. An dieser Stelle sei erwähnt, das die Turbomaschine 130 bzw. der Turbokompressorstrang 130 auch weitere Zuleitungen und/oder weitere Ableitungen aufweisen kann.

Bei der Anlage 100 wird das Prozessmedium b über die Zuleitung 135 dem Turbokompressorstrang 130 zugeführt. Anstelle nur einer Zuleitung 135 könnten auch mehrere Zuleitungen verwendet werden, um das Prozessmedium dem Turbokompressorstrang zuzuführen. Zudem ist die Anlage 100 eingerichtet, einen Teil des Prozessmediums b als Dichtungsmedium c (oder Dichtungsgas, sog. "Seal Gas") abzuzweigen und dem Turbokompressorstrang 130 zuzuführen.

Weiterhin weist die Anlage 100 eine Einrichtung 120 zur Bereitstellung von Trennmedium d (oder Trenngas, sog. "Separation Gas") auf, wobei die Anlage 100 zudem dazu eingerichtet ist, das Trennmedium d dem Turbokompressorstrang 130 zuzuführen. Weiterhin ist die Anlage 100 eingerichtet, ein Medien-Gemisch e von dem Turbokompressorstrang 130 wieder dem Prozessmedium b zuzumischen, und zwar insbesondere bevor das Prozessmedium der Turbomaschine zugeführt wird.

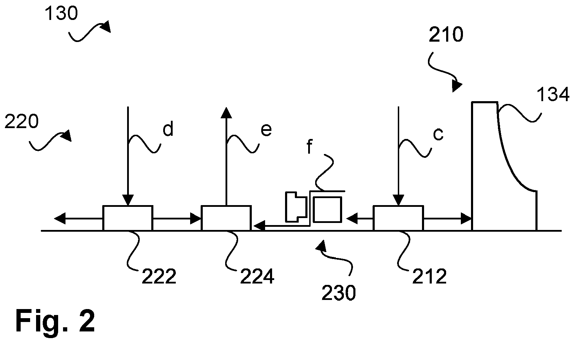

In Figur 2 ist die Turbomaschine 130 (hier wieder ein Turbokompressorstrang) der Anlage aus Figur 1 schematisch, jedoch mit mehr Details dargestellt. Die in Bezug auf Figur 1 nicht näher erläuterten Aspekte bzgl. der verschiedenen Medien und deren Situation, insbesondere in dem Turbokompressor 130, sollen nachfolgend näher erläutert werden.

Der Turbokompressorstrang 130 weist eine Trockengasdichtung 230 auf, und zwar zur Abdichtung zwischen einer Prozessseite 210 und einer Umgebungsseite 220 mit einem Umgebungsbereich 220. Bei der Prozessseite 210 handelt es sich um eine Seite oder einen Bereich des Turbokompressors 130, auf der das Prozessmedium zugeführt und verdichtet wird. Davon ist also z.B. der Impeller 134 umfasst. Mit anderen Worten ist also z.B. der Impeller auf der Prozessseite 210 des Turbokompressors angeordnet, und zwar insbesondere relativ zur Trockengasdichtung 230 gesehen.

Als Art der Trockengasdichtung kommen dabei verschiedene Arten in Betracht; die üblichsten Varianten sind hierbei Einzel, Doppel oder Tandemdichtungen.

Bei der Umgebungsseite 220 hingegen handelt es sich um eine Seite, auf die das Prozessmedium möglichst nicht gelangen sollte; die Umgebungsseite 220 umfasst also z.B. das Lager sowie auch den Antrieb. Mit anderen Worten sind also z.B. das Lager sowie der Antrieb auf der Umgebungsseite 220 des Turbokompressors angeordnet, und zwar insbesondere relativ zur Trockengasdichtung 230 gesehen.

Wie erwähnt, kann der Impeller 134 z.B. in einem Gehäuse (hier nicht gezeigt) eingebracht sein bzw. von einem Gehäuse umgeben sein, in welchem Gehäuse dann z.B. auch die Zuleitung (oder Saugleitung) angebracht sein kann, um eine Abdichtung nach außen zu erreichen, sodass eine Leckage von Prozessmedium vermieden wird. Zur Umgebungsseite bzw. dort insbesondere dem Lager hin aber ist zur Abdichtung die Trockengasdichtung 230 vorgesehen. Aufgrund der Welle und deren Lagerung im Lager gibt es hier rotierende Teile, die auf diese Weise möglichst gut abgedichtet werden können.

Wie bereits zu Figur 1 erwähnt, wird das Prozessmedium b über die Zuleitung 135 dem Turbokompressor 130, und zwar auf der Prozessseite 210, dort wiederum insbesondere dem Impeller 134, zugeführt (in Figur 2 ist das Prozessmedium b nicht gezeigt). Zudem wird, wie ebenfalls erwähnt, das Dichtungsmedium c, das druckseitig vom Prozessmedium b abgezweigt wurde, dem Turbokompressor 130 zugeführt, und zwar ebenfalls auf der Prozessseite 210. Das Dichtungsmedium c wird dabei aber nicht dem Impeller 134, sondern es wird hier einem Bereich 212 nahe der Trockengasdichtung 230 zugeführt.

Wie ebenfalls bereits erwähnt, kann jedoch, wenngleich mit geringer Leckage Rate, ein gewisser Teil des Dichtungsmediums c durch die Trockengasdichtung 230 von der Prozessseite 210 auf die Umgebungsseite 220 gelangen, und zwar insbesondere während eines Betriebs des Turbokompressors. Ein solcher Teil des Dichtungsmediums ist hier mit f bezeichnet. Da als Dichtungsmedium vorzugsweise ein Teil des Prozessmediums abgezweigt wird, gelangt also auch ein Teil des Prozessmediums auf die Umgebungsseite

Wie schon in Bezug auf Figur 1 erwähnt, wird dem Turbokompressor 130 auch das Trennmedium d zugeführt, und zwar auf der Umgebungsseite 220, hier in einem Bereich 222. Dies dient dazu, z.B. den Fluss des Teils f des Dichtungsmediums von einer weiteren Ausbreitung auf der Umgebungsseite 220 abzuhalten. Vorzugsweise wird das Trennmedium zwischen Labyrinth- oder Kohleringdichtungen eingespeist.

Dies führt dazu, dass sich das Trennmedium d und der Teil f des Dichtungsmediums, oder zumindest jeweils ein Teil davon, sofern Dichtungsmedium auf die Umgebungsseite 220 gelangt ist, sich mischen, und zwar z.B. in einem Mischungsbereich 224. Das dabei entstehende Medien-Gemisch ist mit e bezeichnet.

Dieses Medien-Gemisch e wird, wie schon erwähnt, aus dem Turbokompressor 130 bzw. dessen Inneren abgeführt und dann wieder dem Prozessmedium b zugeführt, und zwar z.B. bevor dieses in den Turbokompressor bzw. zum Impeller 134 gelangt.

Das mittels des Turbokompressors bzw. mittels des Impellers 134 geförderte Prozessmedium wird, wie erwähnt, einer Sequestrierung 140 zugeführt. Je nachdem, wieviel Trennmedium in dem Medien-Gemisch e enthalten war, welches dem Prozessmedium zugeführt wird, verbleibt damit ein gewisser Teil (ggf. im Sinne einer Verunreinigung) des Trennmediums in dem geförderten und z.B. der Sequestrierung zuzuführenden Prozessmedium.

Je nach Art der Verwendung des geförderten Prozessmediums ist dies jedoch akzeptabel. Insbesondere bei der Erzeugung von Blauem Wasserstoff oder Blauem Ammoniak, bei der Kohlenstoffdioxid (als Prozessmedium) der Sequestrierung zuzuführen ist, ist dies hinnehmbar, zumal das zu fördernde Prozessmedium, wenn es aus der Einrichtung 110 erhalten wird, ohnehin nicht notwendigerweise in reiner Form vorliegt und es vorwiegend darum geht, das Kohlenstoffdioxid nicht an die Umgebung abzugeben.

## Patentansprüche

1. Verfahren zum Fördern eines Prozessmediums (b), insbesondere
Kohlenstoffdioxid, mittels einer Turbomaschine (130), wobei die Turbomaschine eine gasgeschmierte Dichtung (230) zur Abdichtung zwischen einer Prozessseite (210) der Turbomaschine und einer Umgebungsseite (220) der Turbomaschine aufweist,
wobei das Prozessmedium (b) über eine oder mehrere Zuleitungen (135) der Turbomaschine (130) auf der Prozessseite (210) zum Fördern, insbesondere zum Verdichten, zugeführt wird,
wobei der Turbomaschine (130) auf der Prozessseite (210) ein Dichtungsmedium (c) zugeführt wird, wobei ein Leckage-Teil (f) des Dichtungsmediums (c) von der Prozessseite (210) über die gasgeschmierte Dichtung (230) zur Umgebungsseite gelangen kann,
wobei der Turbomaschine (130) auf der Umgebungsseite (220) ein Trennmedium (d) zugeführt wird, wobei sich zumindest ein Teil des Trennmediums und, falls vorhanden, zumindest ein Teil des Leckage-Teils zum einem Medien-Gemisch (e) vermischen, und
wobei zumindest ein Teil des Medien-Gemisches (e) abgeführt und dem Prozessmedium zugeführt wird

2. Verfahren nach Anspruch 1, wobei der zumindest eine Teil des Medien-Gemisches (e) dem Prozessmedium zugeführt wird, bevor das Prozessmedium der Turbomaschine (130) auf der Prozessseite (210) zugeführt wird.

3. Verfahren nach Anspruch 1 oder 2, wobei als gasgeschmierte Dichtung eine Trockengasdichtung verwendet wird.

4. Verfahren nach einem der vorstehenden Ansprüche, wobei die Turbomaschine (130) einen Turbokompressor aufweist, bei dem der Förderbereich zum Verdichten des Prozessmediums (b) eingerichtet ist.

5. Verfahren nach einem der vorstehenden Ansprüche, wobei als Dichtungsmedium (c) dasselbe Medium wie das Prozessmedium (b) verwendet wird, wobei insbesondere ein Teil des über eine oder mehrere Ableitungen (137) der Turbomaschine (130) auf der Prozessseite (210) abzuführenden Prozessmediums abgezweigt und als das Dichtungsmedium (c) der Turbomaschine (130) auf der Prozessseite (210) zugeführt wird.

6. Verfahren nach einem der vorstehenden Ansprüche, wobei als Prozessmedium (b), zumindest im Wesentlichen, ein kohlenstoffhaltiges Gas, insbesondere Kohlenstoffdioxid, verwendet wird.

7. Verfahren nach einem der vorstehenden Ansprüche, wobei als Trennmedium (d) Stickstoff verwendet wird.

8. Verfahren nach einem der vorstehenden Ansprüche, wobei das Prozessmedium (b) nach der Turbomaschine (130) einer Sequestrierung zugeführt wird.

9. Verfahren nach einem der vorstehenden Ansprüche, wobei das Prozessmedium (b) aus einer ersten Einrichtung (110) zur Erzeugung von Wasserstoff (a) oder Ammoniak erhalten wird.

10. Anlage (100) zum Fördern eines Prozessmediums (b), mit einer Turbomaschine (130), wobei die Turbomaschine (130) eine gasgeschmierte Dichtung (230) zur Abdichtung zwischen einer Prozessseite (210) der Turbomaschine und einer Umgebungsseite (220) der Turbomaschine, und eine oder mehrere Zuleitungen (135) und eine oder mehrere Ableitungen (137) für das Prozessmedium aufweist,
wobei die Anlage eingerichtet ist, das Prozessmedium über die eine oder zumindest eine der mehreren Zuleitungen (135) der Turbomaschine (130) auf der Prozessseite (210) zum Fördern, insbesondere zum Verdichten, zuzuführen,
wobei die Anlage eingerichtet ist, der Turbomaschine (130) auf der Prozessseite (210) ein Dichtungsmedium zuzuführen, wobei die Turbomaschine derart ausgebildet ist, dass ein Leckage-Teil (f) des Dichtungsmediums (c) von der Prozessseite (210) über die gasgeschmierte Dichtung (230) zur Umgebungsseite (220) gelangen kann,
wobei die Anlage (100) eingerichtet ist, der Turbomaschine (130) auf der Umgebungsseite (220) ein Trennmedium (d) zuzuführen,
wobei die Turbomaschine (100) einen Mischungsbereich (224) aufweist, der derart ausgebildet ist, dass sich dort zumindest ein Teil des Trennmediums und zumindest ein Teil des Leckage-Teils in dem Umgebungsbereich zum einem Medien-Gemisch (e) vermischen können, und
wobei die Anlage (100) eingerichtet ist, zumindest einen Teil des Medien-Gemisches (e) vom Mischungsbereich abzuführen und dem Prozessmedium zuzuführen.

11. Anlage (100) nach Anspruch 10, die weiterhin eingerichtet ist, einen Teil des über die eine oder zumindest eine der mehreren Ableitungen (137) von der Prozessseite abzuführenden Prozessmediums abzuzweigen und als das Dichtungsmedium (c) dem Prozessbereich zuzuführen.

12. Anlage (100) nach Anspruch 10 oder 11, wobei das Prozessmedium (b), zumindest im Wesentlichen, ein kohlenstoffhaltiges Gas, insbesondere Kohlenstoffdioxid, ist oder umfasst.

13. Anlage (100) nach einem der Ansprüche 10 bis 12, mit Einrichtung (110), die zur Erzeugung von Wasserstoff oder Ammoniak eingerichtet ist, wobei die Anlage eingerichtet ist, bei der Erzeugung von Wasserstoff oder Ammoniak in der Einrichtung (110) erhaltenes Medium als das Prozessmedium der Zuführung zuzuführen.

14. Anlage (100) nach einem der Ansprüche 10 bis 13, wobei die Turbomaschine (130) einen Turbokompressor zum Verdichten des zu fördernden Prozessmediums aufweist.
